# EUROPÄISCHE PATENTSCHRIFT

(11) **EP 0 730 792 B1**
(45) Veröffentlichungstag und Bekanntmachung des Hinweises auf die Patenterteilung: **19.05.1999**
(21) Anmeldenummer: 95934638.8
(22) Anmeldetag: 23.09.1995
(51) Int. Cl.: H02K 7/06, B06B 1/16

(54) **MOTORGETRIEBENER UNWUCHTVIBRATOR**
UNBALANCED MASS VIBRATION GENERATOR
VIBRATEUR A BALOURD ENTRAINE PAR UN MOTEUR

(30) Priorität: 26.09.1994 DE 4434221
(43) Veröffentlichungstag der Anmeldung: 11.09.1996
(73) Patentinhaber: NETTER GMBH, D-55252 Mainz-Kastel (DE)
(72) Erfinder: KRÖGER, Dietrich, D-65207 Wiesbaden (DE)
(74) Vertreter: Fuchs Mehler Weiss & Fritzsche
(86) Internationale Anmeldenummer: EP9503773
(87) Internationale Veröffentlichungsnummer: WO9610285

(56) Entgegenhaltungen:
- DE-A- 2 200 170
- DE-A- 4 116 060
- DE-C- 400 390
- GB-A- 2 001 732
- US-A- 3 385 253
- PATENT ABSTRACTS OF JAPAN vol. 016 no. 240 (E-1211) ,3.Juni 1992 & JP,A,04 049831 (C I KASEI CO LTD) 19.Februar 1992,

## Beschreibung

Die Erfindung betrifft einen motorgetriebenen Unwuchtvibrator nach dem Oberbegriff des Patentanspruches 1.

Solche Unwuchtvibratoren sind in der Regel mit elektromotorischen Antrieben versehen. Sie werden auch als Elektro-Unwuchtmotoren bezeichnet - ähnlich dem analogen Ausdruck "Getriebemotoren" - weil sie im allgemeinen als kompakte Baueinheiten ausgeführt sind, in deren Gehäuseverlängerungen wie das Getriebe bei einem Getriebemotor die Unwuchtmassen im allgemeinen mit integriert sind. Sie werden auch als Flanschrüttler bezeichnet, weil das Gehäuse im allgemeinen mit einem Befestigungsflansch versehen ist, über den die kompakte Baueinheit an der Maschine oder Vorrichtung befestigt werden kann, die mit Hilfe des Vibrators in Schwingbewegungen versetzt werden soll.

Unwuchtvibratoren der hier betroffenen Art arbeiten häufig in einem Drehzahlbereich bis 25 Hz. Häufig wird auch gefordert, daß das Arbeitsmoment bzw. die wirksame Unwuchtmasse veränderbar ist. Insbesondere zu diesem Zweck weisen bekannte Unwuchtvibratoren auf über das Motorgehäuse hinaus verlängerten Wellenzapfen jeweils zwei- oder mehrteilige Unwuchtmassen auf, die in unterschiedlichen Drehwinkelstellungen zueinander arretierbar sind, um auf diese Weise die resultierende Unwuchtmasse beeinflussen zu können. Sind die beiden Unwuchtmassen gleich, heben sie sich bei einer Winkelstellung von 180° zueinander auf, so daß keine Unwucht entsteht. Werden beide Massen auf die gleiche Winkelstellung eingestellt, ergibt sich die maximale Unwucht des Gerätes. Dazwischen sind eine Mehrzahl von Übergangsstellungen möglich. Zwecks einfacher konstruktiver Ausgestaltung wird die Verstellbarkeit der Unwuchten gegeneinander meist derart ausgebildet, daß der eine Teil der Unwucht fest auf dem zugehörigen Wellenzapfen angebracht und nur der andere Teil gegenüber dem ersten verdrehbar ausgeführt wird, wobei die gegenseitige Arretierung beispielsweise zwischen den beiden Unwuchtteilen untereinander erfolgen kann. Bei einer derartigen Verstellbarkeit verändert sich mit einer Unwuchtanpassung die Winkelstellung der resultierenden Unwucht auf der Welle, so daß bei Antrieben mit mehreren Vibratoren, beispielsweise für gerichtete und synchronisierte Schwingungen die Drehwinkelstellung in der Synchronisationseinrichtung neu vorgegeben werden muß. Dies erfordert unnötigen Aufwand. Zum Zwecke möglichst symmetrischer Lagerbelastung sind bekannte Vibratoren meist an beiden Enden des Antriebsmotors mit Unwuchten bzw. Unwuchtpaaren versehen. Diese Ausgestaltung hat zusätzlich den Vorteil, daß durch unterschiedliche Unwuchten oder unterschiedliche Stellungen der Unwuchten an beiden Enden auch Taumelbewegungen erzeugt werden können.

Beispielhafte Anwendungen von hier betrachteten Unwuchtvibratoren sind beispielsweise Poliermaschinen und Entgratungsgeräte, in denen mechanische Bauteile in einem Trog behandelt werden, oder Schwingsiebe. Bei einer Vielzahl dieser Anwendungsfälle werden die Vibratoren für das Erzeugen von Schwingungen in horizontalen Ebenen mit senkrechter Achslage eingebaut, und zwar im allgemeinen unterhalb des Arbeitsteiles des betroffenen Gerätes. In einer solchen. Einbaulage sind nach Entfernen eines schützenden Maschinenteiles die oberen Unwuchten beispielsweise für eine Verstellung meist verhältnismäßig gut zugänglich. Bei den unteren Unwuchten gestaltet sich diese Zugänglichkeit häufig sehr schwierig. Konstruktiv wird die Zugänglichkeit noch dadurch erschwert, daß die Vibratoren wegen der Anordnung von Unwuchten auf beiden Wellenenden verhältnismäßig lang bauen, so daß die unteren Unwuchten in der Nähe des Maschinensockels zu liegen kommen oder bei relativ großen Geräten zwecks der Zugänglichkeit des Arbeitsbereiches dieser Maschinen sogar in einer Bodengrube versenkt werden müssen, wenn eine niedrige Arbeitshöhe erforderlich ist.

Ein Schwingmotor mit den Merkmalen des Oberbegriffs von Anspruch 1 ist in der DE-OS 22 00 170 beschrieben. Er weist eine vergleichsweise große axiale Baulänge auf, die mehr als dreimal so groß ist, wie die zur Unterbringung von Rotor und Stator erforderliche Baulänge, von denen die Antriebsleistung abhängig ist. Dies wird als nachteilig angesehen.

Aus Patent Abstracts of Japan vol. 016 no. 240 (E-1211), 3. Juni 1992 & JP, A, 04 049831 (C I KASEICO LTD), 19. Februar 1992, ist ein bürstenloser zylindrischer Motor bekannt geworden, der als Schwingmotor verwendbar ist. Dieser Motor zeichnet sich durch eine geringe Baugröße aus. Er umfaßt eine Welle, die in einem Hohlzylinder gelagert ist, der an einem Ende einen sich in zwei Stufen radial erstreckenden Flansch aufweist. Mit dem Flansch ist ein zylindrischer Tragkörper für die Statorwicklung verbunden. Die Welle ist an einem Ende mit zwei konzentrisch angeordneten topfförmigen Bauteilen verbunden, von denen das innere als Träger für den Magneten dient. Das äußere Bauteil übergreift den Tragkörper für den Stator und kann teilweise abgetrennt werden, wenn der Motor zur Erzeugung von Schwingungen benutzt werden soll. Bei diesem Motor wird bemängelt, daß er nur für sehr kleine Leistungsgrößen ausführbar ist, weil der vergleichsweise komplizierte konstruktive Aufbau bei größeren Bau- und Leistunggrößen praktisch nicht realisierbar ist. Außerdem ist die Sonderkonstruktion des Motors verglichen mit Normmotoren selbstverständlich wesentlich teurer.

Der Erfindung liegt die Aufgabe zugrunde, einen Unwuchtvibrator der eingangs genannten Art zu schaffen, bei dem die vorgenannten Nachteile überwunden sind, der also bei vorgegebener Leistungsgröße mit einer möglichst geringen Baulänge auskommt und dazu keine Motor- Sonderkonstruktionen erfordert, sondern bei dem - zumindest hinsichtlich der für die Antriebsleistung maßgeblichen Bauteile - auf bewährte Norm- Motoren zurückgegriffen werden kann. Außerdem sollen alle Verstellarbeiten am Vibrator bei senkrechtem Einbau, gegebenenfalls nach Abnehmen einer oberen Maschinenverkleidung von oben ausgeführt werden können, wobei eine Veränderbarkeit der Unwuchtmomente natürlich erhalten bleiben soll. Weiterhin wird angestrebt, die Veränderung der Unwuchtmomente in einer solchen Weise vornehmen zu können, daß die resultierende Winkelstellung der Unwuchtmasse zur Antriebswelle erhalten bleibt, damit Antriebe mit mehreren Vibratoren für speziell definierte Schwingungsformen nach einer Unwuchtveränderung nicht umjustiert werden müssen.

Diese Aufgabe wird erfindungsgemäß dadurch gelöst, daß der mindestens eine Unwuchtkörper auf dem mindestens einen Wellenzapfen einen radial außenliegenden Abschnitt aufweist, der sich in axialer Richtung über das Motorgehäuse erstreckt und um dieses Herumrotierbar ist, wobei das Trägheitszentrums des mindestens einen Unwuchtkörpers zwischen den Lagerungen des Rotorkörpers liegt.

Vorteilhafte Weiterbildungen und Abwandlungen des Erfindungsgedanken werden in den Unteransprüchen 2 bis 12 beschrieben.

Bei den bekannten Geräten wurde in der Regel darauf geachtet, daß die auf beiden Wellenenden des Antriebsmotors angeordneten Unwuchtsmassen den Außenumfang des Motors nicht überschritten, ja vielmehr sogar im Durchmesser unter deren Außenumfang blieben, damit beispielsweise die Unwuchtmassen aus Sicherheitsgründen in das verlängerte Motorgehäuse miteinbezogen werden konnten, um so eine Baueinheit mit möglichst durchgehend gleichen maximalen Umfangsabmessungen zu erhalten. Dies wurde im allgemeinen auch bei solchen Geräten so gehandhabt, deren Unwuchten wegen des Einbaus der Vibratoren in einen geschlossenen Raum der Anwendungsmaschine nicht gekapselt zu sein brauchten.

Wird bei bekannten Konstruktionen der Außenumfang des Motors durch die Unwuchten nicht überschritten, so müssen diese eine für das jeweils gewünschte Arbeitsmoment erforderliche Dicke aufweisen, womit die axiale Gesamtbaulänge dann entsprechend vergrößert wird.

Direkt abweichend von dieser bisherigen Gepflogenheit sieht die Erfindung vor, die Unwuchtmassen in ihrem Durchmesser zu vergrößern und die radial außen liegenden Teile der Unwuchtkörper, die wegen der quadratischen Abstandsabhängigkeit die größte Wirksamkeit entfalten, bezogen auf das Gerät in axialer Erstreckung in sich über das Motorgehäuse zurückzuführen und um dieses herum rotieren zu lassen. Durch diese Ausführung wird direkt eine geringere Baulänge des Vibrators erreicht, da durch die höhere Wirksamkeit der radial weiter außen liegenden Schnitte der Unwuchtmassen deren radiale Befestigungsabschnitte an den Wellenzapfen in ihrer Masse wesentlich verringert und in ihrer axialen Erstreckung dimensionsmäßig verkleinert werden können. Der Durchmesser des Gesamtvibrators nimmt bei der erfindungsgemäßen Ausführung zwar zu, dies ist in einem Großteil der Anwendungsfälle jedoch nicht hinderlich. Auch eine Kapselung der rotierenden Unwuchtmassen wäre möglich, indem ein Überwurfgehäuse verwendet wird, welches mit einem erweiterten Befestigungsflansch verbunden werden könnte. Da die Vibratoren bei vielen Anwendungsfällen aber in einen abgeschlossenen Raum einer Arbeitsmaschine eingebaut werden, ist bei der erfindungsgemäßen Ausführung eine Kapselung der Unwuchten im allgemeinen nicht erforderlich.

Auch bei der erfindungsgemäßen Ausführung wäre es grundsätzlich möglich, wie dies bei bekannten Geräten der Fall ist, Unwuchten auf beiden Wellenenden vorzusehen und diese auch zweiteilig auszuführen. So könnte z.B. die Zweiteiligkeit derart ausgebildet sein, daß die radialen Abschnitte beider Unwuchtteile, wie beim Stand der Technik hintereinander auf dem Wellenzapfen angeordnet, die axialen Abschnitte aber konzentrisch versetzt zueinander ausgebildet sind, um sie bei gegenseitigem Verdrehen mehr oder minder miteinander in Überdeckung bringen zu können. Die axialen Abschnitte der Unwuchtkörper könnten von beiden Seiten rückwärts bis nahe an die Längenmitte des Gehäuses geführt werden, wobei in der Gehäusemitte noch genügend Platz verbleiben müßte, um dort einen Umfangsflansch für die Befestigung des Vibrators vorzusehen.

Die grundsätzliche erfindungsgemäße Ausbildung bietet nun aber gerade den entscheidenden weiteren Vorteil, daß auf diese herkömmlichen Ausbildungsarten verzichtet werden kann. Erstens läßt sich durch die Rückführung des axialen Abschnittes des Unwuchtkörpers über das Gehäuse die Lagerbelastung durch die Wellenzapfen des Rotors auch bei Vorsehen eines Unwuchtkörpers nur an einem Ende des Gerätes in entsprechender Weise wie bei den bekannten Geräten verringern, wenn der axiale Teil des Unwuchtkörpers entsprechend weit über das Gehäuse zurückgeführt wird, so daß der Massenschwerpunkt bzw. das resultierende Trägheitszentrum in einer Längsschnittebene durch das Gerät auch bei der erfindungsgemäßen Ausführung zwischen die Lager zu liegen kommt und bei entsprechender axialer Verlängerung des Unwuchtkörpers sogar bis nahe in die Mitte zwischen den Lagern gebracht werden kann. Die Befestigungsmittel am Gehäuse sind bei einer solchen Ausführungsform zu demjenigen Ende des Motorgehäuses hin zu verschieben, welches dem Unwuchtkörper abgewandt ist.

Die erfindungsgemäße Ausbildung bietet darüber hinaus aber auch die Möglichkeit, für die Veränderbarkeit der Unwuchtmassen auf die zweiteilige Ausführung im herkömmlichen Sinne, nämlich die gegenseitige Verdrehbarkeit von zwei Teilen, verzichten zu können. Hierdurch wird zusätzlich die Baulänge des Gerätes verringert.

Dadurch nämlich, daß bei der erfindungsgemäßen Ausführung der sich axial erstreckende Abschnitt der Unwuchtmasse auf einen verhältnismäßig größeren Abstand von der Drehachse des Gerätes gebracht worden ist, erhöht sich dessen Wirkung wegen der quadratischen Abstandsabhängigkeit, so daß es bei der erfindungsgemäßen Ausführung maßgeblich dieser radial außen liegende, axiale Abschnitt des Unwuchtkörpers ist, welcher die resultierende Gesamtunwucht bestimmt. Veränderungen an diesem radial außen liegenden Teil haben daher entsprechend großen Einfluß auf das resultierende Arbeitsmoment. Für die Veränderung der Unwuchtmasse ist daher erfindungsgemäß in bevorzugter Ausführungsform vorgesehen, in dem radial außen liegenden, axialen Abschnitt des Unwuchtkörpers Ausnehmungen vorzusehen, in die nach Bedarf Zusatzmassen eingeschoben werden können. Diese Ausnehmungen verlaufen zweckmäßigerweise, ausgehend von der außenliegenden Stirnseite des Vibrators in axialer Richtung in den axialen Abschnitt der Unwuchtmasse hinein, so daß die Zusatzgewichte mühelos von außen in axialer Richtung in den Unwuchtkörper eingeschoben werden können. Bei senkrechtem Einbau des Vibrators und oben liegendem Unwuchtkörper können die Zusatzmassen nicht nur in einfacher Weise bei von oben gewährleisteter Zugänglichkeit des Gerätes in den Unwuchtkörper eingeschoben werden, sie bedürfen darüber hinaus sogar keiner besonderen Befestigung, da sie durch die Fliehkraft ständig in Kontakt mit der Außenwand der Ausnehmung im Unwuchtkörper gehalten werden und sich nach oben auch nicht aus dem Unwuchtkörper entfernen können.

Die Ausnehmungen sind zweckmäßigerweise zylindrisch ausgebildet, so daß als Zusatzmassen einfache Zylinderkörper passend in diese Ausnehmungen eingeschoben werden können. Es hat sich ergeben, daß bei einer speziellen Ausführung gemäß der Erfindung durch diese Maßnahme das Arbeitsmoment verdoppelt bzw. halbiert werden kann. Ein derartiger Spielraum ist im allgemeinen ausreichend. Durch Verwendung von Einschubkörpern unterschiedlicher spezifischer Masse ist eine weitere Anpassung möglich.

Um die Möglichkeit einer Massenveränderung auf diesem Wege weitgehend auszuschöpfen, ist es zweckmäßig, entlang des vom Unwuchtkörper eingenommenen Umfangssegmentes eine Folge von Ausnehmungen vorzusehen, so daß wahlweise ein oder mehrere Zusatzmassen eingesetzt oder herausgenommen werden können. Die Ausnehmungen sind dabei vorzugsweise symmetrisch zum wirksamen Schwerpunkt der Unwucht vorzusehen, so daß auch symmetrisch hierzu Zusatzmassen eingesetzt und entfernt werden können, um, wie vorzugsweise angestrebt, den Winkel des Massenschwerpunktes des Unwuchtkörpers zur Drehstellung der Antriebsachse nicht zu verändern.

Bei entsprechender axialer Erstreckung des axialen Abschnittes des Unwuchtkörpers ist es mit dieser Ausführungsform auch möglich, Taumelbewegungen zu erzeugen, indem in die Ausnehmungen Zusatzmassen eingesetzt werden, die sich nur über einen bestimmten Bereich der axialen Ausnehmung erstrecken. Der verbleibende Raum kann durch Abstandshalter oder dergleichen freigehalten werden.

In bevorzugter Ausführungsform mit einem einzigen Unwuchtkörper, nur auf einem der Wellenzapfen angeordnet und für senkrechten Einbau vorgesehen, erfüllt ein derart erfindungsgemäß ausgebildeter Vibrator alle eingangs aufgezeigten Forderungen. Für senkrechten Einbau wird der Unwuchtkörper am oberen Ende des Vibrators vorgesehen, wobei sich der Unwuchtkörper mit seinem axialen Abschnitt über die Längenmitte des Gehäuses hinaus nach unten erstreckt. Entsprechend sind am unteren Ende des Gehäuses über den Umfang verteilt flanschartige Befestigungsmittel vorgesehen, deren Auflageflächen nach unten weisen. Die Tatsache, daß am unteren Wellenzapfen keine Unwucht vorhanden ist, kann dafür ausgenutzt werden, hier am Gehäuseende auf einfache Weise einen Positionswinkelgeber vorzusehen. An einem derart ausgebildeten, in senkrechter Position in ein Arbeitsgerät eingebauten Vibrator können sämtliche Verstellmaßnahmen an den Unwuchtmassen auf einfache Weise von oben aus ausgeführt werden.

Im folgenden wird die Erfindung anhand eines bevorzugten Ausführungsbeispieles eines Unwuchtvibrators für senkrechten Einbau anhand der beigefügten Zeichnungen im einzelnen noch zusätzlich erläutert. In den Zeichnungen stellen dar:
Fig. 1 einen Axialschnitt durch einen Unwuchtvibrator,
Fig. 2 eine Seitenansicht des Vibrators nach Fig. 1,
Fig. 3 eine gegenüber Fig. 2 um 90° gedrehte Seitenansicht, und
Fig. 4 eine Draufsicht auf den Vibrator nach Fig. 1.

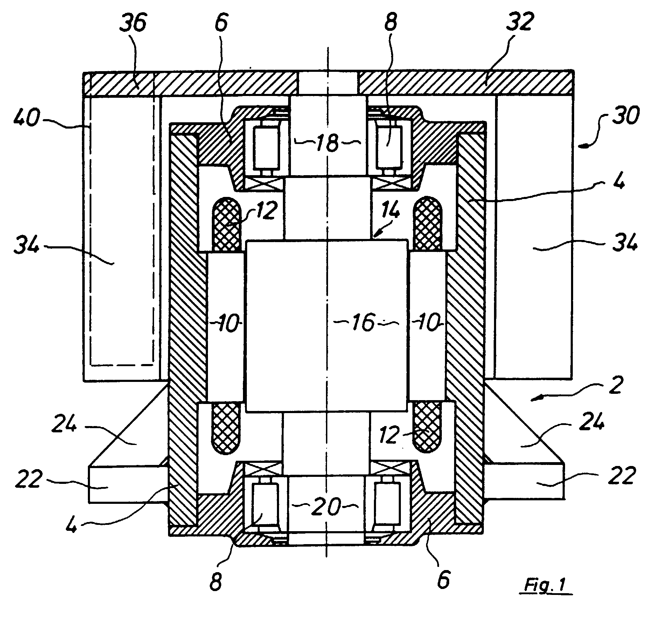

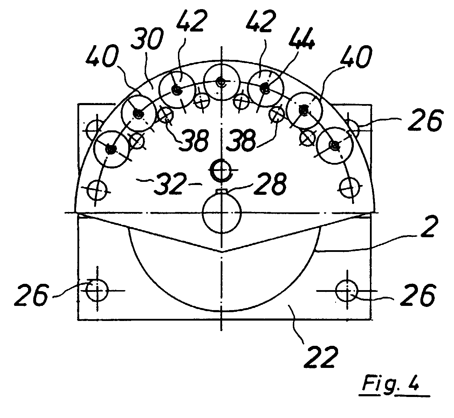

Der in Fig. 1 im Längsschnitt dargestellte motorgetriebene Unwuchtvibrator weist ein Motorgehäuse 2 auf, mit einem im wesentlichen zylindrischen Gehäusemantel 4 und zwei endseitigen Gehäusedeckeln 6, welche je ein Wälzlager 8 enthalten. Der Gehäusemantel 4 enthält im Inneren Statorpolschuhe 10, die von Statorwicklungen 12 umgeben sind. Drehbar in den Wälzlagern 8 gelagert ist der Läufer oder Rotor 14 des Motors, welcher einen Rotorkörper 16 aufweist, der an seinen entgegengesetzten Enden mit Wellenzapfen 18 und 20 versehen ist, mittels derer der Läufer 16 in den Lagern 8 gelagert ist. An seinem unteren Ende ist der Gehäusemantel 4 mit einer umlaufenden, im Ausführungsbeispiel rechteckig ausgebildeten Flanschplatte 22 versehen, die gegenüber dem Gehäuse noch mittels Versteifungsrippen 24 abgestützt ist. Die Flanschplatte 22 ist ferner mit Schraubenlöchern 26 versehen (Fig. 4), die der Befestigung des Vibrators an seinem Einsatzort dienen.

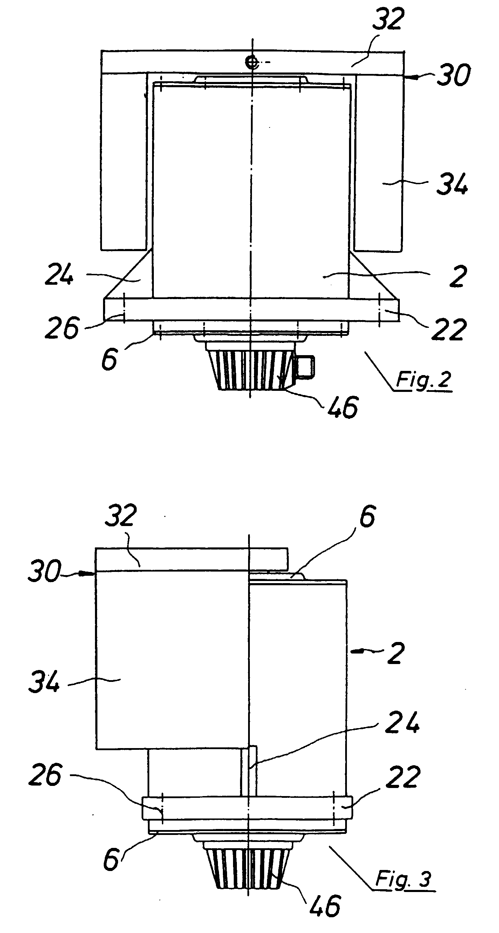

An dem oberen Ende des oberen Wellenzapfens 18 ist ein Unwuchtkörper 30 angeordnet, der, wie sich aus Fig. 4 ergibt, über eine Keilverbindung 28 drehfest mit dem Wellenzapfen 18 verbunden ist. Der Unwuchtkörper 30 weist einen radialen Abschnitt 32 auf, der, wie der Fig. 4 zu entnehmen ist, im wesentlichen als eine halbkreisförmige Scheibe ausgebildet ist, die jedoch im Bereich des Kreismittelpunktes dreieckförmig erweitert ist, um im Kreismittenbereich genügend Material für eine Bohrung zur Befestigung auf dem Wellenzapfen 18 zur Verfügung zu haben. Weiterhin weist der Unwuchtkörper 30 einen axialen Abschnitt 34 auf, der halbzylinderschalenförmig ausgebildet ist, wie sich insbesondere aus den Darstellungen der Fig. 2 und 3 ergibt, wobei Fig. 3 eine um 90° gedrehte Ansicht der Fig. 2 bei gleicher Stellung des Unwuchtkörpers 30 ist. Der axiale Abschnitt 34 ist im Ausführungsbeispiel durch Verschraubungen mit einem radial außen liegenden kreisringförmigen Umfangsabschnitt 36 des radialen Abschnittes 32 des Unwuchtkörpers 30 verbunden (Fig. 1). Die hierfür vorgesehenen Schraubenlöcher 38 sind in der Draufsicht der Fig. 4 zu erkennen.

Aus den zeichnerischen Darstellungen ist deutlich zu erkennen, daß im Ausführungsbeispiel der radiale Abschnitt 32 des Unwuchtkörpers 30 als eine Scheibe mit verhältnismäßig geringer Dicke ausgebildet ist, während dem gegenüber die Dicke des Zylinderschalenteiles des axialen Abschnittes 34 des Unwuchtkörpers 30 wesentlich dicker und somit mit einer höheren Masse ausgebildet ist. Diese radial relativ weit außen liegende Rotationsmasse des axialen Abschnittes 34 bestimmt die Unwucht des Vibrators maßgeblich. Es ist weiterhin insbesondere aus den Fig. 1 und 2 deutlich zu erkennen, daß sich der axiale Abschnitt 34 des Unwuchtkörpers 30 in axialer Richtung bis über die Längenmitte des Gehäusemantels 4 hinaus erstreckt, und zwar bis dicht an die Versteifungsrippen der Flanschplatte 22, wodurch der Rotationsschwerpunkt des Unwuchtkörpers 30 in einen axialen Bereich zwischen die Wälzlager 8 verlegt ist. Dadurch ergibt sich trotz einseitig fliegend gelagerten Unwuchtkörpers eine relativ gleichmäßige Belastung beider Lager 8.

Aus Fig. 4 ergibt sich, daß der Unwuchtkörper 30 einen Kranz von Ausnehmungen in Form von axialen Bohrungen 40 aufweist, von denen in der Schnittdarstellung der Fig. 1 lediglich eine in gestrichelten Linien angedeutet ist, wobei aus Gründen der einfacheren Darstellung deren Position nicht genau mit einer der Positionen der Fig. 4 übereinstimmt. In der Darstellung der Fig. 4 sind in die axialen Bohrungen 40 zylindrische Zusatzmassen 42 passend eingesetzt. Die Zusatzmassen 42 sind an ihrem oberen Ende je mit einer zentralen Gewindebohrung 44 versehen, in die sich ein Griff zum Herausziehen der Zusatzmassen einschrauben läßt.

Die Zusatzmassen 42 sind lose in die Bohrungen 40 eingesetzt und nicht in besonderer Weise befestigt, was bei einer senkrechten Einbaulage des Vibrators ausreicht.

Die Bohrungen 40 sind gemäß Fig. 4 symmetrisch zu der senkrechten Mittellinie des Unwuchtkörpers 30 angeordnet, durch welche senkrecht zur Zeichenebene die Massensymmetrieebene des Unwuchtkörpers verläuft. Durch symmetrische Bestückung des Unwuchtkörpers 30 mit Zusatzmassen 42 zu beiden Seiten der Symmetrieebene läßt diese in ihrer Winkelstellung im Verhältnis zum Wellenzapfen 18 unverändert.

Die Zusatzmassen 42 müssen sich nicht über die gesamte Länge der Bohrungen 40 erstrecken. Wählt man Zusatzmassen von halber Länge, die auf einer Seite der Massensymmetrieebene im oberen Bereich der Bohrungen 40 und auf der anderen im unteren positioniert werden, lassen sich mit dem Vibrator auch Taumelschwingungen erzeugen.

Werden im Ausführungsbeispiel für die Zusatzmassen Schwermetalle verwendet, läßt sich das Arbeitsmoment des Vibrators gegenüber einem Betrieb ohne Zusatzmassen in etwa verdreifachen. Wird für den Unwuchtkörper wie auch für die Zusatzmassen gleichermaßen Eisen verwendet, gelangt man etwa zu einer Verdoppelung des Arbeitsmomentes, wenn alle Bohrungen 40 mit Zusatzmassen 42 bestückt sind.

Aus den Fig. 2 und 3 ist noch zu erkennen, daß am unteren Ende des Vibrators ein Drehwinkelgeber 46 angeordnet ist, der die Winkelstellung des Rotors 16 und somit auch des Unwuchtkörpers 30 am unteren Wellenzapfen 20 abtastet. Bei einem Schwingantrieb mit mehreren Vibratoren zum Ausbilden einer bestimmt gerichteten Schwingung ist es erforderlich, die Drehwinkel dieser mehreren Geräte bei der Rotation der Unwuchtmassen entsprechend zu synchronisieren. Dies ist durch entsprechend steuerbare Elektromotoren möglich und dem Fachmann geläufig.

Der dargestellte elektromotorisch betriebene Unwuchtvibrator ist ideal für den Einbau mit vertikal ausgerichteter Achse in entsprechenden Arbeitsmaschinen, da er gerade bei Maschinen, die eine senkrechte Ausrichtung verlangen, wenig Konstruktionshöhe einnimmt und eine gewünschte Änderung der Unwuchtmasse bequem allein von der Oberseite her ausgeführt werden kann.

## Patentansprüche

1. Motorgetriebener Unwuchtvibrator mit
- einem Motorgehäuse (2) mit einem Gehäusemantel (4) mit endseitigen Deckeln (6), welches mit Befestigungsmitteln, insbesondere einem Befestigungsflansch (22) für die Befestigung des Vibrators an seinem Einsatzort versehen ist,
- einem innerhalb des Motorgehäuses (2) rotierbar angeordneten Rotorkörper (16) des Motors, der an seinen entgegengesetzten Enden mit je einem Wellenzapfen (18, 20) versehen ist,
- Lagern (8) für die Wellenzapfen (18, 20) in den Deckeln (6) des Motorgehäuses (2), in denen der Rotorkörper (16) drehbar über die Wellenzapfen (18, 20) gelagert ist, und
- mindestens einem rotierbaren Unwuchtkörper (30) auf mindestens einem der Wellenzapfen (18), der mit dem Wellenzapfen (18) außerhalb der Lager (8) drehfest verbindbar ist,
dadurch gekennzeichnet, daß der mindestens eine Unwuchtkörper (30) auf dem mindestens einen Wellenzapfen (18) einen radial außen liegenden Abschnitt (34) aufweist, der sich in axialer Richtung über das Motorgehäuse (2) erstreckt und um dieses herum rotierbar ist, wobei das Trägheitszentrum des mindestens einen Unwuchtkörpers (30) zwischen den Lagerungen (8) des Rotorkörpers (16) liegt.

2. Vibrator nach Anspruch 1, **dadurch gekennzeichnet,** daß jeder Unwuchtkörper (30) einen radialen Abschnitt (32) im wesentlichen in Gestalt eines Teiles oder eines Sektors einer Kreisscheibe aufweist, der zwecks Befestigung des Unwuchtkörpers auf dem Wellenzapfen (18) den Kreisscheibenmittelbereich miteinschließt, und daß dieser sich in axialer Richtung über das Gehäuse erstreckende axiale Abschnitt (34) als Teil eines Zylindermantels ausgebildet ist, der an seiner einen Seite mit einem kreisförmigen Außenumüngsbereich (36) des radialen Abschnittes (32) verbunden ist.

3. Vibrator nach Anspruch 1 oder 2, **dadurch gekennzeichnet,** daß das mindestens eine Lager (8) für jeden der Wellenzapfen (18, 20) in einem Ende (6) des Gehäuses (2) angeordnet und der mindestens eine Unwuchtkörper (30) auf mindestens einem der Wellenzapfen (18) auf einer sich über das mindestens eine Lager (8) des Wellenzapfens (18) hinaus erstreckenden Verlängerung dieses Wellenzapfens (18) angeordnet ist.

4. Vibrator nach mindestens einem der Ansprüche 1 bis 3, **dadurch gekennzeichnet,** daß nur auf einem der Wellenzapfen (18) mindestens ein Unwuchtkörper (30) angeordnet ist.

5. Vibrator nach mindestens einem der Ansprüche 1 bis 4, **dadurch gekennzeichnet,** daß auf dem mindestens einen Wellenzapfen (18) nur ein Unwuchtkörper (30) angeordnet ist.

6. Vibrator nach Anspruch 5, **dadurch gekennzeichnet,** daß dieser Unwuchtkörper (30), insbesondere in dem radial außen liegenden, sich in axialer Richtung über das Gehäuse (2, 4) erstreckenden Abschnitt (34) in einer Masse veränderbar ausgebildet ist.

7. Vibrator nach Anspruch 6, **dadurch gekennzeichnet,** daß zur Veränderung der Masse des Unwuchtkörpers (30) Zusatzmassen (42) vorgesehen sind, die in axiale Ausnehmungen (40) des axialen Abschnittes (34) des Unwuchtkörpers (30) in axialer Richtung einführbar und erforderlichenfalls in diesen Ausnehmungen festlegbar sind.

8. Vibrator nach Anspruch 7, **dadurch gekennzeichnet,** daß eine Mehrzahl von axialen Ausnehmungen (40) für Zusatzmassen (42) symmetrisch zu einer radialen Massensymmetrieebene des Unwuchtkörpers (30) angeordnet ist.

9. Vibrator nach mindestens einem der Ansprüche 4 bis 8, **dadurch gekennzeichnet,** daß sich der mindestens eine Unwuchtkörper (30) mit seinem axialen Abschnitt (34) bis über die Längenmitte des Gehäuses (2, 4) erstreckt und die Befestigungsmittel (22) in der Nähe des anderen Endes des Gehäuses (2, 4) vorgesehen sind.

10. Vibrator nach mindestens einem der Ansprüche 4 bis 9 für vertikalen Einbau, **dadurch gekennzeichnet,** daß der mindestens eine Unwuchtkörper (30) fliegend auf einer Verlängerung des oberen Wellenzapfens (18) angeordnet ist und das Gehäuse (2, 4) nach unten gerichtet übergreift, und daß die Befestigungsmittel (22) am Gehäuse (2, 4) als ein das untere Ende des Gehäuses (2, 4) umgebender Flansch bzw. als am unteren Ende des Gehäuses über den Umfang verteilte Auflagekonsolen ausgebildet sind, mit nach unten weisender Auflagefläche.

11. Vibrator nach mindestens einem der Ansprüche 1 bis 10, **dadurch gekennzeichnet,** daß der Motor ein Elektromotor ist.

12. Vibrator nach mindestens einem der Ansprüche 1 bis 11, **dadurch gekennzeichnet,** daß einer Wellenzapfen (20), insbesondere ein Wellenzapfen, der keinen Unwuchtkörper trägt, mit einem Drehwinkelgeber (46) versehen ist.

## Claims

1. Motor-driven unbalanced mass vibration generator including
- a motor housing (2), including a housing wall (4) with covers (6) at the ends, which is provided with fastening means, particularly a fastening flange (22), for fastening the vibration generator at its place of use,
- a rotor body (16) of the motor, which is rotatably arranged within the motor housing (2) and which is provided at its opposite ends with a respective shaft journal (18, 20),
- bearings (8) for the shaft journals (18, 20) in the covers (6) of the motor housing (2) in which the rotor body (16) is rotatably mounted by means of the shaft journals (18, 20), and
- at least one rotatable eccentric body (30) on at least one of the shaft journals (18), which is rotationally fixedly connectable to the shaft journal (18) outside the bearings (8),
characterised in that the at least one eccentric body (30) on the at least one shaft journal (18) has a radially outer section (34), which extends in the axial direction over the motor housing (2) and is rotatable about it, the centre of inertia of the at least one eccentric body (30) being situated between the bearings (8) of the rotor body (16).

2. Vibration generator as claimed in Claim 1, characterised in that each eccentric body (30) has a radial section (32) substantially in the form of a portion or a sector of a circular disc which includes the central region of the circular disc for the purpose of fastening the eccentric body to the shaft journal (18), and that this axial section (34) which extends over the housing in the axial direction, is constructed as a portion of a cylinder wall which is connected on one side to a circular outer peripheral region (36) of the radial section (32).

3. Vibration generator as claimed in Claim 1 or 2, characterised in that the at least one bearing (8) for each of the shaft journals (18, 20) is arranged in one end (6) of the housing (2) and the at least one eccentric body (30) is arranged on at least one of the shaft journals (18) on an extension of this shaft journal (18) which extends beyond the at least one bearing (8) of the shaft journal (18).

4. Vibration generator as claimed in at least one of Claims 1 to 3, characterised in that at least one eccentric body (30) is arranged on only one of the shaft journals (18).

5. Vibration generator as claimed in at least one of Claims 1 to 4, characterised in that only one eccentric body (30) is arranged on the at least one shaft journal (18).

6. Vibrator as claimed in Claim 5, characterised in that this eccentric body (30) is constructed to be of changeable mass, particularly in the radially outer section (34) extending in the axial direction over the housing (2, 4).

7. Vibration generator as claimed in Claim 6, characterised in that for the purpose of changing the mass of the eccentric body (30), additional masses (42) are provided which may be introduced in the axial direction into axial recesses (40) in the axial section (34) of the eccentric body (30) and, if required, may be secured in these recesses.

8. Vibration generator as claimed in Claim 7, characterised in that a plurality of axial recesses (40) for additional masses (42) are arranged symmetrically with respect to a radial mass symmetry plane of the eccentric body (30).

9. Vibration generator as claimed in at least one of Claims 4 to 8, characterised in that the axial section (34) of the at least one eccentric body (30) extends beyond the longitudinal centre of the housing (2, 4) and the fastening means (22) are provided in the region of the other end of the housing (2, 4).

10. Vibration generator as claimed in at least one of Claims 4 to 9 for vertical installation, characterised in that the at least one eccentric body (30) is arranged overhung on an extension of the upper shaft journal (18) and is downwardly directed and engages over the housing (2, 4) and that the fastening means (22) on the housing (2, 4) are constructed as a flange surrounding the lower end of the housing (2, 4) or as engagement brackets on the lower end of the housing, distributed over the periphery, with a downwardly directed engagement surface.

11. Vibration generator as claimed in at least one of Claims 1 to 10, characterised in that the motor is an electric motor.

12. Vibration generator as claimed in at least one of Claims 1 to 11, characterised in that a shaft journal (20), particularly a shaft journal which carries no eccentric body, is provided with an angular position sensor (46).

## Revendications

1. Générateur de vibrations à balourds entraîné par un moteur, comprenant
- un carter-moteur (2) possédant une enveloppe de carter (4) comprenant des couvercles terminaux (6), qui est muni d'agents de fixation, en particulier d'une bride de fixation (22) pour la fixation du générateur de vibrations à son endroit d'utilisation,
- un corps de rotor (16) du moteur disposé en rotation à l'intérieur du carter-moteur (2), qui est muni à ses extrémités opposées respectivement d'un tourillon d'arbre (18, 20),
- des paliers (8) pour les tourillons (18, 20) dans les couvercles (6) du carter-moteur (2), dans lesquels est monté le corps de rotor (16) en rotation via les tourillons d'arbres (18, 20), et
- au moins un corps rotatif (30) de masse non équilibrée sur au moins un des tourillons d'arbres (18), qui peut être relié à demeure avec le tourillon d'arbre (18) à l'extérieur des paliers (8),
caractérisé en ce que le corps en question (30) de masse non équilibrée sur le tourillon d'arbre en question (18) présente une section (34) disposée à l'extérieur en direction radiale, qui s'étend en direction axiale par-dessus le carter-moteur (2) et qui est à même d'effectuer des rotations autour de ce dernier, le centre d'inertie du corps en question (30) de masse non équilibrée étant situé entre les paliers (8) du corps de rotor (16).

2. Générateur de vibrations selon la revendication 1, caractérisé en ce que chaque corps (30) de masse non équilibrée présente une section radiale (32) essentiellement sous la forme d'une partie ou d'un secteur d'un disque circulaire qui, à des fins de fixation du corps de masse non équilibrée sur le tourillon de palier (18), englobe la zone médiane du disque circulaire, et en ce que cette section axiale (34) s'étendant en direction axiale par-dessus le carter est réalisée sous la forme d'une partie d'une enveloppe de cylindre qui est reliée sur son premier côté à une zone de réception externe de forme circulaire (36) de la section radiale (32).

3. Générateur de vibrations selon la revendication 1 ou 2, caractérisé en ce que le ou les paliers (8) pour chaque tourillon d'arbre (18, 20) est disposé dans une extrémité (6) du carter (2) et le ou les corps (30) de masses non équilibrées sur au moins un des tourillons d'arbre (18) sont disposés sur un prolongement de ce tourillon d'arbre (18) s'étendant au-delà du ou des paliers (8) du tourillon d'arbre (18).

4. Générateur de vibrations selon au moins une des revendications 1 à 3, caractérisé en ce qu'au moins un corps (30) de masse non équilibrée est disposé sur seulement un des tourillons de paliers (18).

5. Générateur de vibrations selon au moins une des revendications 1 à 4, caractérisé en ce qu'un seul corps (30) de masse non équilibrée est disposé sur le ou les tourillons d'arbres (18).

6. Générateur de vibrations selon la revendication 5, caractérisé en ce que ce corps (30) de masse non équilibrée est réalisé, en particulier dans la section (34) située à l'extérieur en position radiale et s'étendant en direction axiale au-delà du carter (2, 4), avec une masse qui peut être modifiée.

7. Générateur de vibrations selon la revendication 6, caractérisé en ce que, à des fins de modification de la masse du corps (30) de masse non équilibrée, on prévoit des masses supplémentaires (42) qui peuvent être introduites en direction axiale dans des évidements axiaux (40) de la section axiale (34) du corps (30) de masse non équilibrée et qui, en fonction des nécessités, peuvent être fixées dans ces évidements.

8. Générateur de vibrations selon la revendication 7, caractérisé en ce qu'une multitude d'évidements axiaux (40) pour des masses supplémentaires (42) sont disposées symétriquement par rapport à un plan radial de symétrie de masse du corps (30) de masse non équilibrée.

9. Générateur de vibrations selon au moins une des revendications 4 à 8, caractérisé en ce que le ou les corps (30) de masses non équilibrées s'étendent avec leur section axiale (34) jusqu'au-delà de la moitié de la longueur du carter (2, 4), les agents de fixation (22) étant prévus à proximité de l'autre extrémité du carter (2, 4).

10. Générateur de vibrations selon au moins une des revendications 4 à 9 pour le montage vertical, caractérisé en ce que le ou les corps (30) de masses non équilibrées sont disposés en mobilité sur un prolongement du tourillon d'arbre supérieur (18) et enserrent par le haut le carter (2, 4) dirigé vers le bas, et en ce que les agents de fixation (22) sur le carter (2, 4) sont réalisés sous la forme d'une bride entourant l'extrémité inférieure du carter (2, 4), respectivement sous la forme de consoles d'appui réparties sur la périphérie à l'extrémité inférieure du carter, et possédant des surfaces d'appui orientées vers le bas.

11. Générateur de vibrations selon au moins une des revendications 1 à 10, caractérisé en ce que le moteur est un moteur électrique.

12. Générateur de vibrations selon au moins une des revendications 1 à 11, caractérisé en ce qu'un tourillon d'arbre (20), en particulier un tourillon d'arbre qui ne porte pas de corps de masse non équilibrée, est muni d'un codeur (46) de l'angle de rotation.
